# EUROPÄISCHE PATENTSCHRIFT

(11) **EP 2 335 039 B1**
(45) Veröffentlichungstag und Bekanntmachung des Hinweises auf die Patenterteilung: **18.05.2016**
(21) Anmeldenummer: 09780420.7
(22) Anmeldetag: 10.07.2009
(51) Int. Cl.: G01L 7/08, G01L 9/00, G01L 13/02

(54) **SENSORANORDNUNG, VERFAHREN ZUM BETRIEB EINER SENSORANORDNUNG UND VERFAHREN ZUR HERSTELLUNG EINER SENSORANORDNUNG**
SENSOR ARRANGEMENT, METHOD FOR OPERATING A SENSOR ARRANGEMENT AND METHOD FOR PRODUCING A SENSOR ARRANGEMENT
SYSTÈME DE CAPTEUR, PROCÉDÉ POUR FAIRE FONCTIONNER UN SYSTÈME DE CAPTEUR ET PROCÉDÉ POUR PRODUIRE UN SYSTÈME DE CAPTEUR

(30) Priorität: 10.09.2008 DE 102008041942
(43) Veröffentlichungstag der Anmeldung: 22.06.2011
(73) Patentinhaber: Robert Bosch GmbH, 70442 Stuttgart (DE)
(72) Erfinder: AHLES, Marcus, 72793 Pfullingen (DE); BENZEl, Hubert, 72124 Pliezhausen (DE); WEBER, Heribert, 72622 Nuertingen (DE)
(86) Internationale Anmeldenummer: PCT/EP2009/058802
(87) Internationale Veröffentlichungsnummer: WO 2010/028879

(56) Entgegenhaltungen:
- DE-A1- 10 032 579
- DE-A1- 10 226 034
- DE-A1-102004 006 201
- DE-A1-102004 021 041
- DE-U1- 9 105 851

## Beschreibung

### Stand der Technik

Die Erfindung geht aus von einer Sensoranordnung gemäß dem Oberbegriff des Anspruchs 1.

Solche Sensoranordnungen sind allgemein bekannt. Beispielsweise ist aus der Druckschrift DE 102 26 034 A1 ein Sensor und ein Verfahren zur Herstellung eines Sensors bekannt, wobei der Sensor ein Halbleitermaterial umfasst, welches eine erste Dicke und in einem Membranbereich eine zweite Dicke aufweist, wobei die zweite Dicke kleiner als die erste Dicke ist. Im Membranbereich umfasst der Sensor aufgrund der zweiten Dicke eine offene Kaverne. Der Membranbereich ist in Abhängigkeit des Drucks in der offenen Kaverne senkrecht zum Substrat verformbar, wobei Mittel zur Messung der Verformung des Membranbereichs im Übergangsbereich zwischen der ersten und der zweiten Dicke angeordnet sind. Nachteilig an diesem Sensor ist, dass der Membranbereich lediglich zur Bestimmung eines Relativdrucks zwischen dem Druck in der offenen Kaverne und dem Druck auf der anderen Seite des Membranbereichs, d.h. die der offenen Kaverne abgewandten Seite, nutzbar ist, während zur Bestimmung eines Absolutdrucks in der offenen Kaverne eine hermetisch dichte Verkappung auf der anderen Seite des Membranbereichs angeordnet werden muss. Aufgrund der Dichtheitsanforderungen an die Verkappung ist die Herstellung und Montage der Verkappung vergleichsweise aufwändig und kostenintensiv. Eine andere Anordnung wird z.B. im Dokument

DE 102 004 021 041 beschrieben.

### Offenbarung der Erfindung

Die erfindungsgemäße Sensoranordnung, das erfindungsgemäße Verfahren zum Betrieb einer Sensoranordnung und das erfindungsgemäße Verfahren zur Herstellung einer Sensoranordnung gemäß den nebengeordneten Ansprüchen haben gegenüber dem Stand der Technik den Vorteil, dass in einer vergleichsweise einfachen und kostengünstigen Art und Weise die Messung eines Absolutdrucks ermöglicht wird, wobei der zu messende Absolutdruck insbesondere einen vergleichsweise hohen Druck umfasst. Ferner wird durch die Integration des zweiten Membranbereichs und der Kaverne in den ersten Membranbereich eine vergleichsweise bauraumkompakte Sensoranordnung ermöglicht und eine Verkappung des Sensors ist vollständig einsparbar, wodurch die Herstellungskosten reduzierbar sind und die Systemintegration erheblich vereinfacht wird, wobei insbesondere bei der Integration der Sensoranordnung in ein Fahrzeug aufgrund des begrenzten verfügbaren Bauraums im Fahrzeug Kompaktheit und einfache Integrierbarkeit von großem technischem und wirtschaftlichem Interesse sind. Dies wird dadurch erreicht, dass der zweite Membranbereich und die Kaverne in das Material des ersten Membranbereich integriert sind, so dass der erste Membranbereich durch eine Verformung senkrecht zur Haupterstreckungsebene einen Relativdruckmessung vorzugsweise zwischen einem ersten Druck auf der ersten Seite und einem zweiten Druck auf der zweiten Seite des Substrats bzw. in einem Graben auf der zweiten Seite durchführt, während durch die Integration des zweiten Membranbereichs und der Kaverne in den ersten Membranbereich eine Absolutdruckmessung zwischen dem zweiten Druck und einem dritten Druck bzw. einem Referenzdruck in der Kaverne ermöglicht wird. Vorzugsweise erstreckt sich die Kaverne im Wesentlichen parallel zur Haupterstreckungsebene. Die Kaverne ist ferner insbesondere vollständig, d.h. in alle Raumrichtungen, von dem ersten Membranbereich umschlossen, so dass keinerlei zusätzliche Substratfläche neben dem ersten Membranbereich für die Realisierung der Absolutdruckmessung benötigt wird.

Vorteilhafte Ausgestaltungen und Weiterbildungen der Erfindung sind den Unteransprüchen, sowie der Beschreibung unter Bezugnahme auf die Zeichnungen zu entnehmen.

Gemäß einer bevorzugten Weiterbildung ist vorgesehen, dass der zweite Membranbereich zusammen mit der Kaverne einen Absolutdrucksensor und der erste Membranbereich zusammen mit dem Graben Einen Differenzdrucksensor umfassen, so dass besonders vorteilhaft eine Absolutdruckmessung eines vergleichsweise hohen ersten Drucks mittels des Differenzdrucksensors ermöglicht wird, ohne dass eine wesentliche Vergrößerung der benötigten Substratfläche notwendig ist, da der zweite Druck durch die Messung des Absolutdrucksensors bestimmt wird.

Gemäß einer weiteren bevorzugten Weiterbildung ist vorgesehen, dass sich der Graben im Wesentlichen senkrecht zur Haupterstreckungsebene von der ersten Seite bis zum ersten Membranbereich erstreckend vorgesehen ist. Besonders vorteilhaft wird somit ein zu messender erster Druck durch den Graben von der ersten Seite des Substrats aus an den ersten Membranbereich geführt. Vorzugsweise ist somit ein vergleichsweise hohes Aspektverhältnis beim Übergang vom Graben zum ersten Membranbereich realisierbar. Ein weiterer Vorteil ist, dass das den zu messenden ersten Druck aufweisende Medium nicht mit Messelektronik und/oder Messmitteln auf der zweiten Seite des Substrats in Berührung kommt, so dass auch der Druck von aggressiven bzw. ätzenden Medien vermessbar ist.

Gemäß einer weiteren bevorzugten Weiterbildung ist vorgesehen, dass an der ersten Seite ein Glassockel angeordnet ist, wobei der Glassockel vorzugsweise einen Kanal aufweist, welcher mit dem wenigstens einen Graben verbunden ist, so dass besonders vorteilhaft zum Anschluss des Grabens an einen Druckraum der Glassockel als Verbindungs-, Befestigungs-, Dichtungs- und/oder Stabilisierungselement fungiert.

Gemäß einer weiteren bevorzugten Weiterbildung ist vorgesehen, dass der erste Membranbereich ein Versteifungselement aufweist, welches sich bevorzugt von dem ersten Membranbereich senkrecht zur Haupterstreckungsebene in Richtung der ersten Seite erstreckt und welches besonders bevorzugt parallel zur Haupterstreckungsebene im Wesentlichen mittig im ersten Membranbereich bzw. im Graben angeordnet ist. Besonders vorteilhaft wird durch das Versteifungselement ein mittlerer Bereich des ersten Membranbereichs derart versteift, dass eine Auslenkung des ersten Membranbereichs vorzugsweise außerhalb des Versteifungselements erfolgt und somit eine Auslenkung des ersten Membranbereichs keine Deformation des zweiten Membranbereichs bewirkt. Dies hat den Vorteil, dass die Absolutdruckmessung nicht durch die Relativdruckmessung beeinflusst wird und somit eine vergleichsweise hohe Messgenauigkeit gewährleistet wird.

Gemäß einer weiteren bevorzugten Weiterbildung ist vorgesehen, dass im Bereich der zweiten Seite Messelemente und/oder eine Auswerteschaltung angeordnet sind, wobei insbesondere im Bereich der ersten und/oder der zweiten Membranbereiche Messelemente in Form von piezoresistiven Elementen angeordnet sind, so dass besonders vorteilhaft mit vergleichsweise einfachen Mitteln eine Messung und Auswertung der Auslenkungen des ersten und des zweiten Membranbereichs unmittelbar auf dem Substrat durchführbar ist.

Ein weiterer Gegenstand der vorliegenden Erfindung ist ein Verfahren zum Betrieb einer Sensoranordnung, wobei in Abhängigkeit einer ersten Verformung des ersten Membranbereichs ein erster Druck im Graben relativ zu einem zweiten Druck auf der zweiten Seite gemessen wird, wobei in Abhängigkeit einer zweiten Verformung des zweiten Membranbereichs der zweite Druck relativ zu einem dritten Druck in der Kaverne gemessen wird, so dass der absolute Druck des ersten Drucks mit einer vergleichsweise bauraumkompakten und kostengünstig herzustellenden Sensoranordnung messbar ist.

Gemäß einer bevorzugten Weiterbildung ist vorgesehen, dass die erste Verformung mittels ersten piezoresistiven Elementen und die zweite Verformung mittels zweiten piezoresisitven Elementen gemessen werden, so dass die erste Verformung vorzugsweise ein erstes Spannungssignal und die zweite Verformung vorzugsweise ein zweites Spannungssignal erzeugt. Somit ist durch eine Differenzbildung des ersten Spannungssignals mit dem zweiten Spannungssignal der absolute erste Druck in besonders einfacher Weise und mit einem vergleichsweise geringen Schaltungs- und Verdrahtungsaufwand bestimmbar.

Ein weiterer Gegenstand der vorliegenden Erfindung ist ein Verfahren zur Herstellung einer Sensoranordnung, wobei in einem ersten Herstellungsschritt das Substrat bereitgestellt wird, wobei in einem zweiten Herstellungsschritt die Kaverne hergestellt wird und wobei in einem dritten Herstellungsschritt der Graben hergestellt wird, so dass besonders vorteilhaft eine vergleichsweise kostengünstige Herstellung der Sensoranordnung durch die Verwendung von Standardherstellungverfahren im Halbleiterbereich ermöglicht wird.

Gemäß einer bevorzugten Weiterbildung ist vorgesehen, dass in einem vierten Herstellungsschritt, welcher insbesondere zeitlich zwischen dem zweiten und dritten Herstellungsschritt durchgeführt wird, die Messelemente und/oder die Auswerteschaltung im Bereich der zweiten Seite angeordnet werden, so dass eine unmittelbare Integration des elektrischen und elektronischen Komponenten in den Herstellungsprozess der Sensoranordnung erfolgt, so dass zusätzliche Kontaktierungs- und/oder Implementierungsschritte einsparbar sind.

Gemäß einer weiteren bevorzugten Weiterbildung ist vorgesehen, dass der zweite Herstellungsschritt einen ersten und einen zweiten Teilschritt umfasst, wobei im ersten Teilschritt eine poröse Schicht in dem Substrat gebildet wird und wobei im zweiten Teilschritt mittels eines Ätzvorgangs die Kaverne unterhalb und/oder in der porösen Schicht hergestellt wird, wobei bevorzugt der zweite Herstellungsschritt von der zweiten Seite aus durchgeführt wird. Besonders vorteilhaft ist somit eine vergleichsweise kostengünstige Herstellung der Kaverne möglich, wobei insbesondere die bekannte APSM-Technologie (Advanced Porous Silicon Membrane) Verwendung findet, welche beispielsweise aus den Druckschriften WO 02/02458, DE 10 2004 036 032 A1 und DE 10 2004 036 035 A1 bekannt sind.

Gemäß einer weiteren bevorzugten Weiterbildung ist vorgesehen, dass im dritten Herstellungsschritt der Graben in einem Ätzvorgang, insbesondere in einem Trenchprozess, von der zweiten Seite aus hergestellt wird, so dass besonders vorteilhaft Gräben mit einem vergleichsweise hohen Aspektverhältnis herstellbar sind.

Ausführungsbeispiele der Erfindung sind in den Zeichnungen dargestellt und in der nachfolgenden Beschreibung näher erläutert.

### Kurze Beschreibung der Zeichnungen

### Es zeigen

**Figur 1** einen schematische Seitenansicht eines Absolutdrucksensors gemäß dem Stand der Technik,
**Figur 2** eine schematische Seitenansicht eines weiteren Absolutdrucksensors gemäß de Stand der Technik,
**Figur 3** eine schematische Seitenansicht einer Sensoranordnung gemäß einer ersten Ausführungsform der vorliegenden Erfindung,
**Figur 4** eine schematische Seitenansicht einer Sensoranordnung gemäß einer zweiten Ausführungsform der vorliegenden Erfindung,
**Figur 5** eine schematische Seitenansicht einer Sensoranordnung gemäß einer dritten Ausführungsform der vorliegenden Erfindung und
**Figur 6** eine schematische Seitenansicht einer Sensoranordnung gemäß einer vierten Ausführungsform der vorliegenden Erfindung.

### Ausführungsformen der vorliegenden Erfindung

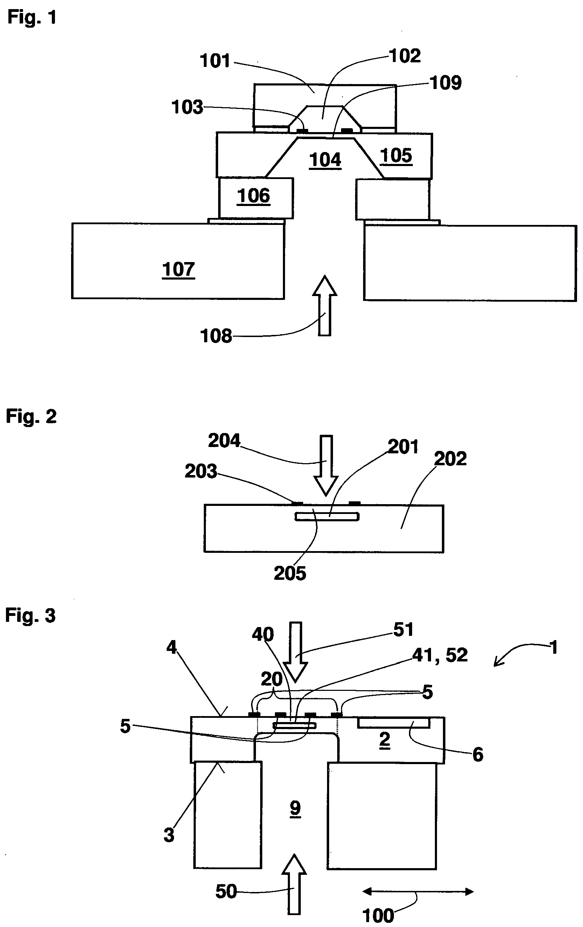

In **Figur 1** ist eine schematische Seitenansicht eines Absolutdrucksensors gemäß dem Stand der Technik dargestellt, wobei ein Sensorsubstrat 105, eine Sensorkaverne 104 und eine Sensormembran 109 aufweist, wobei das Sensorsubstrat 105 mit einem Glassockel 106 verbunden ist, wobei der Glassockel 106 mit einem Kleber auf eine Leiterplatte 107 geklebt ist. Die Leiterplatte 107 und der Glassockel 106 weisen jeweils eine Öffnung auf, so dass von einer Unterseite der Leiterplatte 107 ein Druck 108 in die Sensorkaverne 104 gelangt und die Sensormembran 109 in Abhängigkeit des Drucks 108 und in Abhängigkeit eines Referenzdrucks 102 verformt wird. Diese Verformung wird mittels Piezo-Widerständen 103 auf der Oberseite der Sensormembran 109 gemessen. Die Oberseite der Sensormembran 109 weist eine hermetisch dichte Verkappung 101 auf, welche zur Einstellung des bekannten Referenzdrucks 102 fungiert. Durch die Einstellung des bekannten Referenzdrucks 102 auf der Rückseite der Membran 109 ist mittels der Relativmessung zwischen dem Referenzdruck 102 und dem Druck 108 der absolute Wert des Drucks 108 bestimmbar.

In **Figur 2** ist eine schematische Seitenansicht eines weiteren Absolutdrucksensors gemäß dem Stand der Technik dargestellt, wobei der weitere Absolutdrucksensor ein Substrat 202 und eine Kaverne 201 in dem Substrat 202 aufweist. Die Kaverne 202 ist dabei näher an der Oberseite des Substrats 202 angeordnet und insbesondere in APSM-Technologie hergestellt. Zwischen der Kaverne 202 und der Oberseite des Substrats 202 ist somit eine Membran 205 ausgebildet, welche sich in Abhängigkeit des Relativdrucks zwischen einem Druck auf der Oberseite der Membran 205 und einem Referenzdruck in der Kaverne 201 deformiert, wobei diese Deformation mittels Piezo-Widerständen 203 auf der Oberseite des Substrats 202 gemessen wird. Die Kaverne 202 weist insbesondere ein Vakuum auf.

In **Figur 3** ist eine schematische Seitenansicht einer Sensoranordnung 1 gemäß einer ersten Ausführungsform der vorliegenden Erfindung dargestellt, wobei die Sensoranordnung ein Substrat 2 mit einer Haupterstreckungsebene 100, einen ersten Membranbereich 20 und eine Kaverne 41 aufweist, wobei die der erste Membranbereich 20 die Kaverne 41 insbesondere sowohl in einer Ebene parallel zur Haupterstreckungsebene 100, als auch in einer Ebene senkrecht zur Haupterstreckungsebene 100 vollständig umschließt. Die Kaverne 41 ist hermetisch dicht verschlossen und weist einen dritten Druck 52 bzw. einen bekannten Referenzdruck auf. Der dritte Druck 52 kann beispielsweise auch ein Vakuum umfassen. Das Substrat 2 weist ferner eine im Wesentlichen zur Haupterstreckungsebene 100 parallele erste Seite 3 und eine senkrecht zur Haupterstreckungsebene 100 der ersten Seite 3 gegenüberliegenden zweiten Seite 4 auf, wobei der erste Membranbereich 20 im Wesentlichen näher zur zweiten Seite 4 angeordnet ist und wobei auf der ersten Seite 3 das Substrat 2 einen Graben 21 aufweist, welcher sich in einer Richtung senkrecht zur Haupterstreckungsebene 100 von der ersten Seite 3 bis zum ersten Membranbereich 20 erstreckt und senkrecht zur Haupterstreckungsebene 100 vorzugsweise deckungleich oder zumindest teilweise deckungsgleich mit dem ersten Membranbereich 20 ist. Der erste Membranbereich 20 weist einen zweiten Membranbereich 40 auf, welcher zwischen der zweiten Seite 4 und der Kaverne 41 angeordnet und senkrecht zur Haupterstreckungsebene 100 im Wesentlichen zur Kaverne 41 deckungsgleich ausgebildet ist. Auf der ersten Seite 3 ist das Substrat 2 mit einem Glassockel 8 verbunden, welcher einen mit dem Graben 21 verbundenen Kanal 9 aufweist. Ein zu messender erster Druck 50 gelangt durch den Kanal 9 in den Graben 21 und im Graben 21 in Kontakt mit dem ersten Membranbereich 20. Auf der zweiten Seite 4 des Substrats 2 wirkt ein zweiter Druck 51 auf den ersten Membranbereich 20, so dass eine Deformierung bzw. Verformung bzw. Auslenkung des ersten Membranbereichs 20 zumindest teilweise senkrecht zur Haupterstreckungsebene 100 in Abhängigkeit des Relativdrucks zwischen dem ersten und dem zweiten Druck erfolgt. Diese Auslenkung des ersten Membranbereichs 20 ist mittels Messelementen 5 auf der zweiten Seite 4 des Substrats 2 messbar. Insbesondere wird eine durch die Auslenkung des ersten Membranbereichs 20 gegenüber dem übrigen Substrat 2 auf der zweiten Seite 4 mittels Piezo-Widerständen im Übergangsbereich zwischen dem ersten Membranbereich 20 und dem übrigen Substrat 2 gemessen, wobei eine Deformierung der Piezo-Widerstände eine Änderung des elektrisch Widerstands der Piezo-Widerstände bewirkt und somit bei der Relativdruckmessung zwischen dem ersten und dem zweiten Druck 50, 51 durch den erstes Membranbereich 20 ein erstes Spannungssignal in Abhängigkeit des Relativdrucks zwischen dem ersten und zweiten Druck 50, 51 erzeugt wird. Der zweite Druck 51 wirkt auch auf den zweiten Membranbereich 40, wobei der zweite Membranbereich 40 eine Auslenkung in Abhängigkeit des Relativdrucks zwischen dem zweiten Druck 51 und dem Referenzdruck bzw. dritten Druck 52 in der Kaverne 41 senkrecht zur Haupterstreckungsebene 100 durchführt. Diese Auslenkung wird ebenfalls mittels Messelementen 5' in Form von Piezo-Widerständen gemessen, wobei diese Messelemente 5' im Wesentlichen im Randbereich des zweiten Membranbereichs 40 auf der zweiten Seite 4 angeordnet sind und wobei diese Piezo-Widerstände in Abhängigkeit des zweiten Drucks 51 ein zweites Spannugnssignal erzeugen. Da der dritte Druck 52 bekannt ist und aufgrund der hermetischen Dichtheit der Kaverne 41 im Wesentlichen konstant ist, handelt es sich bei dieser Messung um eine Absolutdruckmessung. Diese Absolutdruckmessung erlaubt die Bestimmung des zweiten Drucks, so dass bei der Relativmessung des ersten Membranbereichs 20 ebenfalls der erste Druck 50 zu bestimmen ist. Besonders bevorzugt wird dazu insbesondere durch eine integrierte Auswerteschaltung 6 auf der zweiten Seite 4 die Differenz aus erstem und zweitem Spannungssignal gebildet. Der Graben 21 wird durch einen Trenchprozess hergestellt. Der Graben 21, die Kaverne 41, der erste Membranbereich 20 und/oder der zweite Membranbereich 40 sind parallel zur Haupterstreckungsebene 100 vorzugsweise rund, kreisrund, oval, mehreckig, quadratisch und/oder ringförmig ausgebildet.

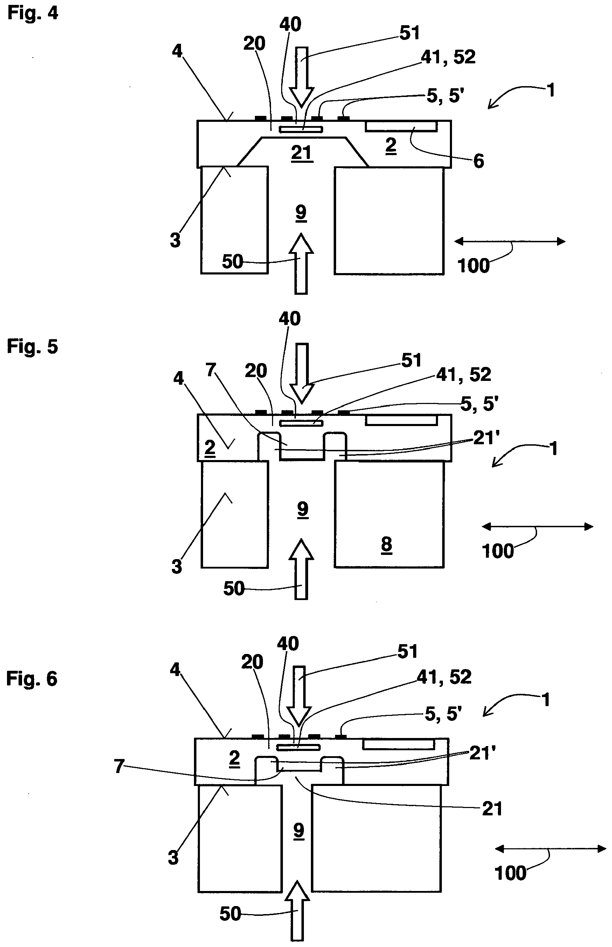

In **Figur 4** ist eine schematische Seitenansicht einer Sensoranordnung 1 gemäß einer zweiten Ausführungsform der vorliegenden Erfindung dargestellt, wobei die zweite Ausführungsform im Wesentlichen identisch der ersten Ausführungsform dargestellt in Figur 3 ist, wobei der Graben 21 eine geringfügig andere Form als in Figur 3 aufweist. Der Graben 21 gemäß der Sensoranordnung 1 der zweiten Ausführungsform wird durch anisotropes Ätzen beispielsweise mittels KOH oder TMAH von der ersten Seite 3 aus hergestellt.

In **Figur 5** ist eine schematische Seitenansicht einer Sensoranordnung 1 gemäß einer dritten Ausführungsform der vorliegenden Erfindung dargestellt, wobei die dritte Ausführungsform im Wesentlichen identisch der ersten Ausführungsform illustriert in Figur 3 ist, wobei der erste Membranbereich 20 ein Versteifungselement 7 aufweist, welches sich von dem ersten Membranbereich 20 senkrecht zur Haupterstreckungsebene 100 bis zur ersten Seite 3 erstreckt und parallel zur Haupterstreckungsebene 100 im Wesentlichen mittig im ersten Kavernenbereich 20 angeordnet ist. Der Graben 21 wird somit in Figur 5 in zwei Teilgräben 21' zerteilt und ist parallel zur Haupterstreckungsebene 100 als das Verstärkungselement 7 kreisrund umlaufender und ringförmiger Graben 21 ausgebildet. Der erste Membranbereich umfasst somit insbesondere eine Bossmembran.

In **Figur 6** ist eine schematische Seitenansicht einer Sensoranordnung 1 gemäß einer vierten Ausführungsform der vorliegenden Erfindung dargestellt, wobei die vierte Ausführungsform im Wesentlichen identisch der dritten Ausführungsform dargestellt in Figur 5 ist, wobei das Verstärkungselement 7 sich von dem ersten Membranbereich 20 nicht vollständig bis zur ersten Seite 3 erstreckt, sondern nur teilweise in den Graben 21 in Richtung zur ersten Seite 3 hin hineinragt.

## Patentansprüche

1. Sensoranordnung (1), insbesondere Drucksensoranordnung, mit einem Substrat (2), wobei das Substrat (2) wenigstens einen Graben (21) auf einer ersten Seite (3) aufweist und wobei der Graben (21) zur Bildung eines ersten Membranbereichs (20) auf einer der ersten Seite (3) gegenüberliegenden zweiten Seite (4) vorgesehen ist, **dadurch gekennzeichnet, dass** in den ersten Membranbereich (20) ein zweiter Membranbereich (40) und eine Kaverne (41) integriert sind.

2. Sensoranordung nach Anspruch 1, **dadurch gekennzeichnet, dass** der zweite Membranbereich (40) zusammen mit der Kaverne (41) einen Absolutdrucksensor und der erste Membranbereich (20) zusammen mit dem Graben (21) einen Differenzdrucksensor umfasst.

3. Sensoranordnung (1) nach einem der vorhergehenden Ansprüche, **dadurch gekennzeichnet, dass** die Deformierung des ersten Membranbereichs ein erstes Spannungssignal und die Deformation des zweiten Membranbereichs ein zweites Spannungssignal erzeugt, wobei insbesondere vorgesehen ist, dass das erste Spannungssignal in Abhängigkeit von einem Relativdruck zwischen zwei Drücken und das zweite Spannungssignal in Abhängigkeit von einem Absolutdruck erzeugt wird.

4. Sensoranordnung (1) nach Anspruch 3, **dadurch gekennzeichnet, dass** in der Sensoranordnung eine Auswerteschaltung (6) integriert ist, die ein Signal in Abhängigkeit von der Differenz des ersten und zweiten Spannungssignal bildet.

5. Sensoranordnung (1) nach einem der vorhergehenden Ansprüche, **dadurch gekennzeichnet, dass** der erste Membranbereich (20) ein Versteifungselement (7) aufweist, welches sich bevorzugt von dem ersten Membranbereich (20) senkrecht zur Haupterstreckungsebene (100) in Richtung der ersten Seite (3) erstreckt und welches besonders bevorzugt parallel zur Haupterstreckungsebene (100) im Wesentlichen mittig im ersten Kavernenbereich (20) und mittig im Graben (21) angeordnet ist.

6. Sensoranordnung (1) nach einem der vorhergehenden Ansprüche, **dadurch gekennzeichnet, dass** im Bereich der zweiten Seite (4) Messelemente (5) und/oder eine Auswerteschaltung (6) angeordnet sind, wobei insbesondere im Bereich der ersten und/oder der zweiten Membranbereiche (20, 40) Messelemente (5, 5') in Form von piezoresistiven Elementen (5') angeordnet sind.

7. Verfahren zum Betrieb einer Sensoranordnung (1) nach einem der vorhergehenden Ansprüche, wobei die Sensoranordnung
- ein Substrat (2) und
- wenigstens einen Graben (21) auf einer ersten Seite (3) des Substrats und
- einen ersten Membranbereichs (20) auf einer der ersten Seite (3) gegenüberliegenden zweiten Seite (4) des Substrats und
- einen im ersten Membranbereich (20) integrierten zweiten Membranbereich (40) und eine Kaverne (41)
aufweist,
**dadurch gekennzeichnet, dass** in Abhängigkeit einer ersten Verformung des ersten Membranbereichs (20) ein erster Druck (50) im Graben (21) relativ zu einem zweiten Druck (51) auf der zweiten Seite (4) gemessen wird, wobei in Abhängigkeit einer zweiten Verformung des zweiten Membranbereichs (40) der zweite Druck (51) relativ zu einem dritten Druck (52) in der Kaverne (41) gemessen wird.

8. Verfahren nach Anspruch 7, wobei die erste Verformung mittels ersten piezoresistiven Elementen ein erstes Spannungssignal und die zweite Verformung mittels zweiten piezoresisitven Elementen ein zweites Spannungssignal erzeugen, **dadurch gekennzeichnet dass** eine Differenz zwischen dem ersten und zweiten Spannungssignal gebildet wird.

9. Verfahren zur Herstellung einer Sensoranordnung (1) nach einem der Ansprüche 1 bis 6, **dadurch gekennzeichnet, dass** in einem ersten Herstellungsschritt das Substrat (1) bereitgestellt wird, wobei in einem zweiten Herstellungsschritt die Kaverne (41) hergestellt wird und wobei in einem dritten Herstellungsschritt der Graben (21) hergestellt wird.

10. Verfahren nach Anspruch 9, **dadurch gekennzeichnet, dass** in einem vierten Herstellungsschritt, welcher insbesondere zeitlich zwischen dem zweiten und dritten Herstellungsschritt durchgeführt wird, die Messelemente (5) und/oder die Auswerteschaltung (6) im Bereich der zweiten Seite (4) angeordnet werden.

11. Verfahren nach einem der Ansprüche 9 oder 10, **dadurch gekennzeichnet, dass** der zweite Herstellungsschritt einen ersten und einen zweiten Teilschritt umfasst, wobei im ersten Teilschritt eine poröse Schicht in dem Substrat (1) gebildet wird und wobei im zweiten Teilschritt mittels eines Ätzvorgangs die Kaverne (41) unterhalb und/oder in der porösen Schicht hergestellt wird, wobei bevorzugt der zweite Herstellungsschritt von der zweiten Seite (4) aus durchgeführt wird.

12. Verfahren nach einem der Ansprüche 9 bis 11, **dadurch gekennzeichnet, dass** im dritten, Herstellungsschritt der Graben (21) in einem Ätzvorgang, insbesondere in einem Trenchprozess, von der zweiten Seite aus hergestellt wird.

## Claims

1. Sensor arrangement (1), in particular a pressure sensor arrangement, comprising a substrate (2), the substrate (2) having at least one trench (21) on a first side (3) and the trench (21) being provided for forming a first membrane region (20) on a second side (4) opposite from the first side (3), **characterized in that** a second membrane region (40) and a cavity (41) are integrated in the first membrane region (20).

2. Sensor arrangement according to Claim 1, **characterized in that** the second membrane region (40) together with the cavity (41) comprises an absolute pressure sensor and the first membrane region (20) together with the trench (21) comprises a differential pressure sensor.

3. Sensor arrangement (1) according to one of the preceding claims, **characterized in that** the deformation of the first membrane region produces a first voltage signal and the deformation of the second membrane region produces a second voltage signal, it being provided in particular that the first voltage signal is produced in dependence on a relative pressure between two pressures and the second voltage signal is produced in dependence on an absolute pressure.

4. Sensor arrangement (1) according to Claim 3, **characterized in that** an evaluation circuit (6) that forms a signal in dependence on the difference between the first voltage signal and the second voltage signal is integrated in the sensor arrangement.

5. Sensor arrangement (1) according to one of the preceding claims, **characterized in that** the first membrane region (20) has a stiffening element (7), which preferably extends from the first membrane region (20) perpendicularly to the main plane of extent (100) in the direction of the first side (3) and which is particularly preferably arranged parallel to the main plane of extent (100) substantially in the middle of the first cavity region (20) and in the middle of the trench (21).

6. Sensor arrangement (1) according to one of the preceding claims, **characterized in that** measuring elements (5) and/or an evaluation circuit (6) are arranged in the region of the second side (4), in particular measuring elements (5, 5') in the form of piezoresistive elements (5') being arranged in the region of the first and/or the second membrane regions (20, 40).

7. Method for operating a sensor arrangement (1) according to one of the preceding claims, the sensor arrangement having
- a substrate (2) and
- at least one trench (21) on a first side (3) of the substrate and
- a first membrane region (20) on a second side (4) of the substrate opposite from the first side (3) and
- a second membrane region (40) and a cavity (41) integrated in the first membrane region (20),
**characterized in that**
a first pressure (50) in the trench (21) is measured in relation to a second pressure (51) on the second side (4) in dependence on a first deformation of the first membrane region (20), the second pressure (51) being measured in relation to a third pressure (52) in the cavity (41) in dependence on a second deformation of the second membrane region (40).

8. Method according to Claim 7, the first deformation producing a first voltage signal by means of first piezoresistive elements and the second deformation producing a second voltage signal by means of second piezoresistive elements, **characterized in that** a difference between the first and the second voltage signal is formed.

9. Method for producing a sensor arrangement (1) according to one of Claims 1 to 6, **characterized in that** the substrate (1) is provided in a first production step, the cavity (41) being produced in a second method step and the trench (21) being produced in a third production step.

10. Method according to Claim 9, **characterized in that**, the measuring elements (5) and/or the evaluation circuit (6) are arranged in the region of the second side (4) in a fourth production step, which is carried out in particular at a time between the second production step the third production step.

11. Method according to either of Claims 9 and 10, **characterized in that** the second production step comprises a first and a second substep, a porous layer being formed in the substrate (1) in the first substep and the cavity (41) being produced underneath and/or in the porous layer by means of an etching process in the second substep, the second production step preferably being carried out from the second side (4).

12. Method according to one of Claims 9 to 11, **characterized in that**, in the third production step, the trench (21) is produced in an etching process, in particular in a trench process, from the second side.

## Revendications

1. Système de capteur (1), en particulier, système de capteur de pression, comportant un substrat (2), dans lequel le substrat (2) comprend, sur une première face (3), au moins une tranchée (21) et dans lequel la tranchée (21) est prévue pour former une première zone de membrane (20) sur une deuxième face (4) opposée à la première face (3), **caractérisé en ce qu'**une deuxième zone de membrane (40) et une cavité (41) sont intégrées à la première zone de membrane (20).

2. Système de capteur selon la revendication 1, **caractérisé en ce que** la deuxième zone de membrane (40) comprend en association avec la cavité (41) un capteur de pression absolue et la première zone de membrane (20) comprend en association avec la tranchée (21) un capteur de pression différentielle.

3. Système de capteur (1) selon l'une quelconque des revendications précédentes, **caractérisé en ce que** la déformation de la première zone de membrane génère un premier signal de tension et la déformation de la deuxième zone de membrane génère un deuxième signal de tension, dans lequel il est en outre fait en sorte que le premier signal de tension soit généré en fonction d'une pression relative entre deux pression et que le deuxième signal de tension soit généré en fonction d'une pression absolue.

4. Système de capteur (1) selon la revendication 3, **caractérisé en ce qu'**un circuit d'évaluation (6) est intégré au système de capteur, lequel circuit d'évaluation crée un signal en fonction de la différence entre les premier et deuxième signaux de tension.

5. Système de capteur (1) selon l'une quelconque des revendications précédentes, **caractérisé en ce que** la première zone de membrane (20) comprend un élément raidisseur (7) qui s'étend de préférence depuis la première zone de membrane (20), perpendiculairement à un plan d'extension principal (100), dans la direction de la première face (3), et qui est en particulier de préférence disposé parallèlement au plan d'extension principal (100) sensiblement au centre de la première zone de cavité (20) et au centre de la tranchée (21).

6. Système de capteur (1) selon l'une quelconque des revendications précédentes, **caractérisé en ce que**, des éléments de mesure (5) et/ou un circuit d'évaluation (6) sont disposés dans la zone de la deuxième face (4), dans lequel des éléments de mesure (5, 5') sous la forme d'éléments piézorésistifs (5') sont en particulier disposés dans la zone des première et/ou deuxième zones de membrane (20, 40).

7. Procédé pour faire fonctionner un système de capteur (1) selon l'une quelconque des revendications précédentes, dans lequel le système de capteur comprend
- un substrat (2) et
- au moins une tranchée (21) sur une première face (3) du substrat et
- une première zone de membrane (20) sur une deuxième face (4) du substrat opposée à la première face (3) et
- une deuxième zone de membrane (40) et une cavité (41) intégrées à la première zone de membrane (20),
**caractérisé en ce qu'**une première pression (50) est mesurée dans la tranchée (21) par rapport à une deuxième pression (51) sur la deuxième face (4) en fonction d'une première déformation de la première zone de membrane (20), dans lequel la deuxième pression (51) est mesurée par rapport à une troisième pression (52) dans la cavité (41) en fonction d'une deuxième déformation de la deuxième zone de membrane (40).

8. Procédé selon la revendication 7, dans lequel la première déformation génère au moyen de premiers éléments piézorésistifs un premier signal de tension et la deuxième déformation génère au moyen de deuxièmes éléments piézorésistifs un deuxième signal de tension, **caractérisé en ce qu'**une différence est établie entre les premier et deuxième signaux de tension.

9. Procédé de production d'un système de capteur (1) selon l'une quelconque des revendications 1 à 6, **caractérisé en ce que** le substrat (1) est fourni lors d'une première étape de production, dans lequel la cavité (41) est produite lors d'une deuxième étape de production, et dans lequel la tranchée (21) est produite lors d'une troisième étape de production.

10. Procédé selon la revendication 9, **caractérisé en ce que** les éléments de mesure (5) et/ou le circuit d'évaluation (6) sont disposés dans la zone de la deuxième face (4) lors d'une quatrième étape de production qui est en particulier exécutée dans le temps entre les deuxième et troisième étapes de production.

11. Procédé selon l'une quelconque des revendications 9 ou 10, **caractérisé en ce que** la deuxième étape de production comprend des première et deuxième étapes partielles, dans lequel une couche poreuse est formée dans le substrat (1) lors de la première étape partielle et dans lequel la cavité (41) est produite au moyen d'un processus de gravure, en-dessous et/ou dans la couche poreuse, lors de la deuxième étape partielle, dans lequel la deuxième étape de production est de préférence exécutée à partir de la deuxième face (4).

12. Procédé selon l'une quelconque des revendications 9 à 11, **caractérisé en ce que** la tranchée (21) est produite lors de la troisième étape de production par un processus de gravure, en particulier, par un processus de création de tranchée, à partir de la deuxième face.
